# EUROPÄISCHE PATENTSCHRIFT

(11) **EP 1 308 647 B1**
(45) Veröffentlichungstag und Bekanntmachung des Hinweises auf die Patenterteilung: **20.12.2006**
(21) Anmeldenummer: 01123800.3
(22) Anmeldetag: 04.10.2001
(51) Int. Cl.: F16H 55/36

(54) **Antriebselement**
Drive element
Elément d'entrainement

(30) Priorität: 05.10.2000 DE 20017227 U
(43) Veröffentlichungstag der Anmeldung: 07.05.2003
(73) Patentinhaber: Kittner Heinrich, 63924 Kleinheubach (DE)
(72) Erfinder: Kittner Heinrich, 63924 Kleinheubach (DE)

(56) Entgegenhaltungen:
- FR-A- 2 122 773
- US-A- 3 181 902
- US-A- 4 402 678

## Beschreibung

Die Erfindung betrifft ein Antriebselement, welches u.a. als Kettenrad, Zahnriemenscheibe, Flachriemenscheibe, Keilriemenscheibe, Poly-V-Profil-Scheibe mit unterschiedlichsten Einsätzen Verwendung findet.
So sind u.a. aus einem Massivstahl, aus einem Gußeisen oder aus einem Leichtmetall gefertigte Keilriemenscheiben bekannt, deren schneller Verschleiß oder ein Festfressen auf der zum Keilriemenantrieb gehörenden Welle von erheblichem Nachteil.
Ein "Herstellungsverfahren mehrrilliger Stahl-Keilriemenscheiben" nach der DE-OS 24 37 072 stellt unter Schutz, auf einer aus Stahl gefertigten Nabe einzelne Scheiben aufzuschweißen.
Die deutsche Gebrauchsmuster-Anmeldung G 90 10 450 löst das Problem einer "Riemenscheibe" derart, dass eine aus Metall bestehende Zwischenbuchse an ihrer äußeren Fläche mindestens einen Vorsprung und eine Vertiefung mit dem Nabenteil verbindet. Die Innenfläche der Zwischenhülse dient der Aufnahme des Wälzlagers. Auch mit einer Paßfeder-Nut den Keilriemenkranz zu befestigen, wurde in der DE-OS 34 45 892 beschrieben. Riemenscheiben bzw. Keilriemenkränze als Antriebselemente können hinsichtlich ihrer Haltbarkeit nicht befriedigen, da infolge der Riemenkräfte umlaufende Biegebeanspruchungen auftreten und die Keilriemen selbst vorzeitig ausgetauscht werden müssen.

Die US-Patentanschrift A-3 181 902, die den nächstliegenden Stand der Technik repräsentiert, beschreibt, dass eine Welle und ein zusätzliches Bauteil verdrehsicher mit einem Vierkant verbunden werden. Um deren axiale Verdrehung zu verhindern, werden zusätzliche Sicherungshilfsmittel, wie Klemmen und ein Schraubstück, an einem Bund der Welle angepasst. Zusätzliche Flanschteile, welche im Abstand zu dem Bauteil an der Welle angebracht werden, begrenzen die Außenbewegungen des auf dem Teil der Welle angebrachten Bauteils.

Der Erfindung liegt die Aufgabe zugrunde, ein lösbares bzw. austauschbares Antriebselement zwecks besserer Kraftübertragung aufgrund seiner Formgebung zu entwickeln

Diese Aufgabe wird in Verbindung mit dem Oberbegriff des Anspruchs 1 erfindungsgemäß durch die kennzeichnenden Merkmale des Anspruchs 1 gelöst.

Das erfindungsgemäße Antriebselement besteht aus einem separat gefertigten Nabenteil.
Eine erfindungsgemäße mehreckige Mitnahmekontur, welche kleiner in ihrem Querschnitt ist als der Durchmesser des Nabenteil-Außenflansches, ist passgenau in einem Antriebskranz-Innenflansch einzulassen.
Zusätzlich am Nabenteil ist an der mehreckigen Mitnahmekontur eine Zentrierung aufgebracht, deren Außendurchmesser kleiner ist als der Querschnitt der mehreckigen Mitnahmekontur.
Die als Ring gefertigte Druckplatte entspricht im Außendurchmesser dem des Antriebskranz-Innenflansch mit seiner mehreckigen Mitnahmekontur und im Innendurchmesser den Außendurchmesser der Zentrierung.
Gewindeschrauben von der Druckplatte ausgehend durch den Antriebskranz-Innenflansch und dem Nabenteil-Außenflansches gewährleisten einen lösbaren Zusammenhalt zwischen diesem Antriebskranz und dem Nabenteil.

Besonders vorteilhaft ist, dass die einzelnen Teile, wie Nabenteil, Keilriemenkranz und Druckplatte aus gängigen Materialien, wie Edelstahl, Aluminium, Stahl, Grauguß, Kunststoff oder Titan zu fertigen und untereinander austauschbar sind. Denn bisher wurden, wie bereits erwähnt, alle Teile durch Eingießen miteinander verbunden und nach Verschleißerscheinungen waren diese Teile nicht reparabel.

Nach der erfindungsgemäßen Lösung kann das separat gefertigte Nabenteil während des Auswechselns über die von der Druckplatte ausgehenden Gewindeschrauben auf der Welle verbleiben und der neue Antriebskranz ist nur aufzuziehen.
Auch bei unterschiedlichen Größen und Breiten der Antriebselemente ist gemäß der erfindungsgemäßen Lösung der Antriebskranz selbst schnell auswechselbar.
Der Antriebskranz selbst kann aus unterchiedlichen Werkstoffen gefertigt sein, aber z.B. auch aus einem Delrin - einem dem Thermoplast nahekommenden Produkt - welcher außer der hohen mechanischen Festigkeit und außerordentlichen geringem Verschleiß desweiteren gute Gleiteigenschaften, extreme Formbeständigkeit bei Temperaturschwankungen sowie eine geringe Wasseraufnahme auszeichnen.
Desweiteren besteht bei geringeren auftretenden Kräften auf das System Antriebselement oder auch aus Konstruktionsgründen die Möglichkeit, ohne dieser Zentrierung am Nabenteil zu arbeiten, da immer noch ein ausreichender Kraftschluß über die mehreckige Mitnahmekontur gewährleistet ist.

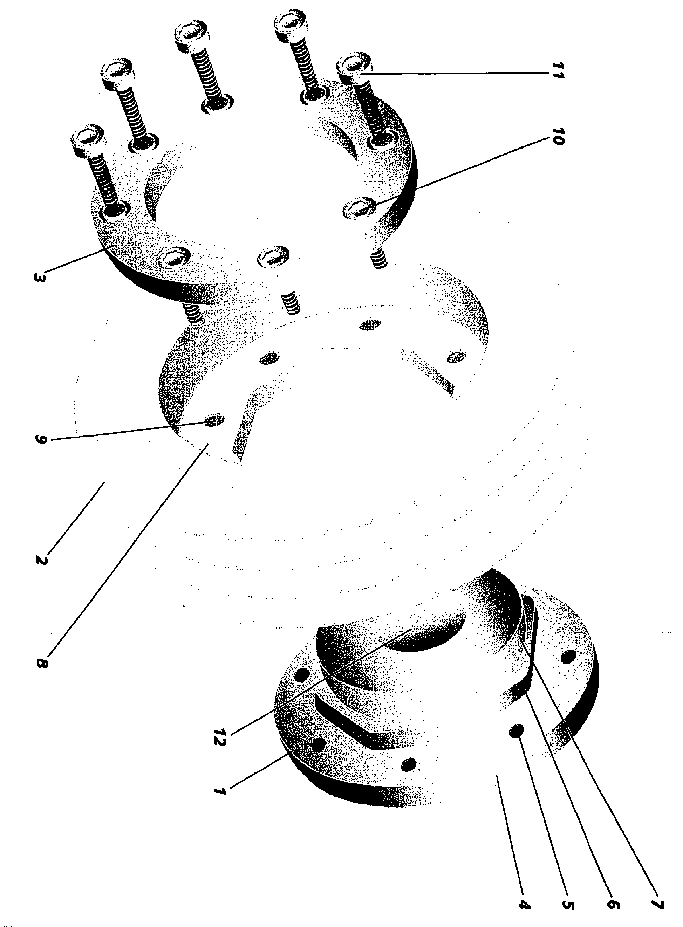

Anhand eines Ausführungsbeispiels soll die erfindungsgemäße Lösung näher erläutert werden.
Die Figur zeigt das Antriebselement mit der mehreckigen - hier achteckigen - Mitnahmekontur am Nabenteil.
Das erfindungsgemäße Antriebselement besteht aus drei selbständigen Teilen: einem aus Edelstahl oder festerem Edelmetall, wie z. B. Titan, gefertigten Nabenteil 1 sowie einem einem Thermoplast nahekommenden Produkt, wie

Delrin, gefertigten Antriebskranz 2 und einer wiederum aus einem Edelstahl gefertigten Druckplatte 3.
Dem Nabenteil 1 ist außer einem Flansch 4 mit Grundbohrungen 5 eine hier achteckige Mitnahmekontur 6 und auf derselbigen eine Zentrierung 7 aufgebracht. Die Zentrierung kann gegebenenfalls entfallen, wenn weniger auftretende Kräfte auf das gesamte Antriebselement oder etwaige Konstruktionsgründe dieses zulassen.
Diese achteckige Mitnahmekontur 6 des Nabenteils 1 ist einem ebenfalls achteckigen Anschraubflansch 8, welcher sich im Inneren des Antriebskranzes 2 befindet, einzupassen. Dieser Anschraubflansch 8 weist die Anzahl von Gewindebohrungen 9, die der Anzahl der Gewindebohrungen 5 vom Nabenteil 1 entsprechen, auf und ist dem Nabenteil 1 zugeordneten Ende im Inneren des Antriebskranzes 2 einzubringen.
Die Druckplatte 3 weist abermals Durchgangsbohrungen 10 gleicher Anzahl der des Antriebskranzes 2 und der Gewindebohrungen 5 des Nabenteils 1 auf. Mit den Gewindeschrauben 11, die von der Druckplatte 3 aus zu bedienen sind, ist der lösbare Funktionszusammenhalt zwischen dem Nabenteil 1 und dem Antriebskranz 2 gewährleistet.
Der Vollständigkeit halber sei erwähnt, dass eine Innenbohrung 12 in der Zentrierung 7 des Nabenteils 1 letztendlich der jeweiligen Wellenform und Wellengröße anzupassen ist.

### Legende

- 1: Nabenteil
- 2: Antriebskranz
- 3: Druckplatte
- 4: Flansch
- 5: Gewindebohrungen
- 6: Mitnahmekontur
- 7: Zentrierung
- 8: Anschraubflansch
- 9: Gewindebohrungen
- 10: Durchgangsbohrungen
- 11: Gewindeschrauben
- 12: Innenbohrungen

## Patentansprüche

1. Antriebselement bestehend aus einem Nabenteil (1), aus einer Druckplatte (3) und einem zwischen beiden mittig angeordneten Antriebskranz (2), wobei eine mehreckige Mitnahmekontur (6) am Nabenteil (1) und ein Anschraubflansch (8) im Inneren des Antriebskranz (2) passgenau zur mehreckigen Mitnahmekontur (6) zu fertigen ist, **gekennzeichnet dadurch, dass** von der Druckplatte (3) aus Gewindeschrauben (11) verbindend über Bohrungen (10) im Anschraubflansch (8) des Antriebskranzes (2) zu Gewindebohrungen (5) des Nabenteils (1) zu führen sind.

2. Antriebselement nach Anspruch 1, **gekennzeichnet dadurch, dass** zur Aufnahme einer Welle eine Zentrierung (7) an die mehreckige Mitnahmekontur (6) zu bringen ist.

3. Antriebselement nach einem der vorangegangenen Ansprüche 1 und 2, **gekennzeichnet dadurch, dass** die innenkontur des Anschraubflansch (8) als Aufnahme der mehreckigen Mitnahmekontur (6) zu fertigen ist.

## Claims

1. Drive section consisting of a hub element (1), a pressure plate (3) and a main ring gear (2) centred between the two above elements, while a polygonal synchronisation contour (6) for the hub element (1) and a mounting flange (8) in the inside of the main ring gear (2) must be manufactured that fits the polygonal synchronisation contour (6) perfectly, **characterised by** the fact that threaded bolts (11) connect the hub element (1) with the pressure plate (3) through holes (10) in the mounting flange (8) of the main ring gear (2) and threaded holes (5) in the hub element (1).

2. Drive section in accordance with claim 1, **characterised by** the fact that a centring (7) is applied to the polygonal synchronisation contour (6), for the uptake of a shaft.

3. Drive section in accordance with the previous claims 1 and 2, **characterised by** the fact that the internal contour of the mounting flange (8) is to be manufactured so that it can take up the polygonal synchronisation contour (6).

## Revendications

1. Elément d'entraînement comprenant un moyeu (1), une plaque de compression (3) et une couronne d'entraînement (2) agencée au centre entre les deux, sachant qu'un contour entraîneur (6) polygonal contre le moyeu (1) et une bride à visser (8) à l'intérieur de la couronne d'entraînement (2) doivent être fabriqués de façon à permettre un ajustage exact avec le contour entraîneur (6) polygonal, **caractérisé en ce que** des vis filetées (11) sont à faire passer de la plaque de compression (3) via des alésages (10) dans la bride à visser (8) de la couronne d'entraînement (2), en direction des alésages filetés (5) du moyeu (1) pour établir la jonction.

2. Elément d'entraînement selon la revendication 1, **caractérisé en ce que** pour recevoir un arbre, il faut amener un centrage (7) contre le contour entraîneur (6) polygonal.

3. Elément d'entraînement selon l'une des revendications précédentes 1 et 2, **caractérisé en ce que** le contour intérieur de la bride à visser (8) est à fabriquer en tant que logement du contour entraîneur (6) polygonal.
